# EUROPEAN PATENT SPECIFICATION

(11) **EP 3 950 864 B1**
(45) Date of publication and mention of the grant of the patent: **25.06.2025**
(21) Application number: 20783193.4
(22) Date of filing: 27.03.2020
(51) Int. Cl.: C09D 183/04, C09D 5/00, C09D 133/06, C09D 193/04, C09D 163/00

(54) **PRIMER COMPOSITION**
GRUNDIERUNGSZUSAMMENSETZUNG
COMPOSITION D'APPRÊT

(30) Priority: 05.04.2019 KR 20190040396
(43) Date of publication of application: 09.02.2022
(73) Proprietor: KCC Corporation, Seoul 06608 (KR)
(72) Inventor: LEE, Jeong Hyun, Ulsan 44262 (KR); LEE, Jae Young, Ulsan 44459 (KR)
(74) Representative: Ipsilon Lyon
(86) International application number: PCT/KR2020/004172
(87) International publication number: WO 2020/204476

(56) References cited:
- EP-A1- 1 172 424
- EP-A1- 3 385 345
- CN-A- 105 189 581
- KR-A- 20020 007 345
- KR-A- 20150 123 261
- US-A- 4 735 830
- US-A- 4 735 830
- US-A1- 2004 176 518
- US-A1- 2013 052 460

## Description

### TECHNICAL FIELD

The present invention relates to a primer composition.

### BACKGROUND ART

Generally, an adhesive is applied for the adhesion of a car body of cars and windows, but the adhesiveness by using only the adhesive is often insufficient. In the case where sufficient adhesiveness is not obtainable with only the adhesive as described above, a primer is applied on an adhesive side in advance, and then, an adhesive is applied to secure sufficient adhesiveness.

As the main materials of the conventionally used primer, a mixture of a binder component (layer-forming component) such as polyester polyurethane and an acrylic resin with a silane coupling agent, polyisocyanate, carbon black, or the like has been used (Korean Laid-open Patent Publication No. 10-2009-0066283).

However, if a urethane resin such as polyester polyurethane is used in the binder component, though the quality of a primer is excellent, there are defects in that weather resistance is deteriorated, and time and cost are not economical with regard to working processes.

Particularly, after a certain amount of time from the application of the primer, an isocyanate group contained in the urethane resin reacts with the moisture in the air, and the activity at the surface of the primer is damaged, and accordingly, in order to obtain sufficient adhesiveness, problems of inferior workability or re-workability including reapplication arise. In addition, such an isocyanate-based primer for cars has problems of not obtaining sufficient adhesiveness onto silicone hard-coated glass. Patent Document 2 relates to a primer composition that is excellent in storage stability so that it can retain excellent adhesion from the time after the coating of a primer until the coating of a sealant and that is excellent also in weatherability and that it can be advantageously used on glass or silicon hard coat, particularly when using a sealant for fixing glass of automobiles.

### [Prior Art Document]

(Patent Document 1) Korean Laid-open Patent Publication No. 10-2009-0066283
(Patent Document 2) EP 1 172 424 A1

### DISCLOSURE OF THE INVENTION

### TECHNICAL PROBLEM

The present invention is to solve the defects of the conventional isocyanate-based primer for urethane adhesive, and provides a primer composition having excellent weather resistance, excellent storage stability and workability after applying the primer due to long pot life, and particularly, and excellent adhesiveness onto a glass as well as a car body for cars.

### TECHNICAL SOLUTION

The present invention provides a primer composition including: an alkoxysilane polymer including a unit derived from a silane-based monomer containing at least two amino or imino groups and a unit derived from a trialkoxysilane-based monomer; an acrylic resin including at least one selected from units derived from non-functional acrylate monomers; and a hydrogenated rosin resin wherein the hydrogenated rosin resin comprises at least one selected from hydrogenated rosin ester-based resins and derivatives thereof, and wherein the hydrogenated rosin resin is contained in an amount of 5 to 30 parts by weight, based on 100 parts by weight of the alkoxysilane polymer.

### ADVANTAGEOUS EFFECTS

The primer composition of the present invention may improve the adhesiveness of the primer by using an alkoxysilane polymer including a unit derived from a trialkoxysilane-based monomer and a unit derived from a silane-based monomer containing at least two amino or imino groups, and an acrylic resin including at least one selected from units derived from non-functional acrylate monomers and a hydrogenated rosin resin, and such a primer composition has excellent weather resistance, excellent storage stability and workability after applying the primer due to long pot life, and particularly, and excellent adhesiveness (particularly, adhesiveness at a low temperature) onto a glass as well as a car body for cars.

### BEST MODE FOR CARRYING OUT THE INVENTION

Hereinafter, the present invention will be explained in detail.

The present invention provides a primer composition.

The primer composition of the present invention includes: an alkoxysilane polymer; an acrylic resin; and a hydrogenated rosin resin.

### <Alkoxysilane polymer>

The alkoxysilane polymer included in the primer composition of the present invention plays the role of improving the adhesiveness of a primer with a basis material or an adhesive (direct glazing urethane (DGU)).

The alkoxysilane polymer may include a unit derived from a silane-based monomer containing at least two amino or imino groups, and a unit derived from a trialkoxysilane-based monomer. That is, the alkoxysilane polymer may be prepared by polymerization of one or more monomers selected from the silane-based monomers containing at least two amino or imino groups, and one or more monomers selected from the trialkoxysilane-based monomers.

The trialkoxysilane-based monomer may be a trialkoxy groupsubstituted trialkoxysilane-based monomer at the terminal thereof, or the trialkoxysilane-based monomer may include at least one functional group selected from an acrylic group, a mercapto group and a glycidyl group.

The trialkoxysilane-based monomer may be 3-methacryloyloxypropyltrimethoxysilane, 3-methacryloyloxypropyltriethoxysilane, 3-acryloyloxypropyltrimethoxysilane, 3-acryloyloxypropyltriethoxysilane, 3-mercaptopropyltrimethoxysilane, 3-mercaptopropyltriethoxysilane, glycidoxypropyltrimethoxysilane, glycidoxypropyltriethoxysilane, bis-(gamma-triethoxysilylpropyl)amine, or bis-(gamma-trimethoxysilylpropyl)amine.

The silane-based monomer containing at least two amino or imino groups may be any one which may undergo polymerization reaction with the trialkoxysilane-based monomer to produce an alkoxysilane polymer, without limitation, and the silane-based monomer containing at least two amino or imino groups may be substituted with a trialkoxy group at the terminal thereof.

In the case where the silane-based monomer containing at least two amino or imino groups is substituted with a trialkoxy group at the terminal thereof, the resultant compound may be different from the aforementioned trialkoxysilane-based monomer.

The silane-based monomer containing at least two amino or imino groups may include N-(beta-aminoethyl)-gamma-aminopropyl trimethoxysilane, N-beta-(aminoethyl)-gamma-aminopropylmethyl dimethoxysilane, or the like, and may include for example, a silane-based monomer containing at least three amino or imino groups (triaminofunctional silane).

The alkoxysilane polymer included in the primer composition may include an alkoxysilane polymer obtained by reacting the trialkoxysilane-based monomer and the silane-based monomer containing at least two amino or imino groups in a weight ratio of greater than 1:1 and 5:1 or less, and specifically may include an alkoxysilane polymer obtained by reacting in a weight ratio of greater than 1:1 and 3:1 or less. If the weight ratio of the trialkoxysilane-based monomer and the silane-based monomer containing at least two amino or imino groups is 1:1 or less, adhesiveness of the primer with an adhesive (DGU) may be deteriorated, and if the weight ratio is greater than 5:1, storage quality may become inferior.

The weight average molecular weight of the alkoxysilane polymer may be 700 to 5,000 g/mol, for example, 700 to 3,000 g/mol. If the weight average molecular weight of the alkoxysilane polymer is less than 700 g/mol, adhesiveness with an adhesive (DGU) may be deteriorated, and if the weight average molecular weight is greater than 5,000 g/mol, storage quality may be deteriorated.

The weight average molecular weight may be measured by a conventional method known in the art, and for example, may be measured by a method such as GPC (gel permeation chromatography).

The viscosity of the alkoxysilane polymer measured at 25°C using a Brookfield viscometer may be 10 to 100 cPs. If the viscosity of the alkoxysilane polymer is less than 10 cPs, the amount of an unreacted monomer may increase, and storage quality may be deteriorated, and if the viscosity is greater than 100 cPs, adhesiveness with a basis material may be deteriorated.

The epoxy equivalent (equivalent epoxy weight: EEW) of the alkoxysilane polymer may be 3,000 g/eq. to 5,000 g/eq. If the epoxy equivalent of the alkoxysilane polymer is less than 3,000 g/eq., adhesiveness with an adhesive (DGU) may be deteriorated, and if the epoxy equivalent is greater than 5,000 g/eq., storage quality may be deteriorated. The epoxy equivalent may be measured according to JIS K7236 and may be measured using perchloric acid, but is not limited thereto.

### <Acrylic resin>

The acrylic resin included in the primer composition of the present invention plays the role of providing the primer with stickiness together with adhesiveness. In addition, if the acrylic resin is included in the primer composition, weather resistance may particularly be excellent, and gloss and color retention may be improved.

The acrylic resin may include at least one selected from units derived from non-functional acrylate monomers.

The acrylic resin may further include at least one selected from units derived from functional acrylate monomers, and the functional acrylate monomer may further include, for example, at least one selected from a glycidyl group-containing acrylate monomer and a hydroxyl group-containing acrylate monomer.

The acrylic resin may include an acrylic resin obtained by reacting the non-functional acrylate monomer and the functional acrylate monomer in a weight ratio of 5:1 to 25:1. If the weight ratio of the non-functional acrylate monomer and the functional acrylate monomer is less than 5:1, weather resistance may become poor, and if the weight ratio is greater than 25:1, adhesiveness with an adhesive (DGU) may become poor.

That is, the acrylic resin may be prepared by polymerizing one or more monomers selected from the non-functional acrylate monomers, or prepared by polymerizing the non-functional acrylate monomer with one or more monomers selected from the glycidyl group-containing acrylate monomer and the hydroxyl group-containing acrylate monomer.

The non-functional acrylate monomer is for particularly providing adhesiveness and stickiness of the primer, and may particularly be one or more selected from the group consisting of an alkyl (meth)acrylate, a cycloalkyl (meth)acrylate and a bicycloalkyl (meth)acrylate. In this case, the alkyl may have 1 to 10 carbon atoms, the cycloalkyl may have 3 to 10 carbon atoms, and the bicycloalkyl may have 5 to 20 carbon atoms.

The non-functional acrylate monomer may be methyl methacrylate (MMA), ethyl methacrylate, butyl methacrylate (BMA), isobutyl methacrylate, tert-butyl methacrylate, n-hexyl methacrylate, 2-ethylhexyl methacrylate, isobornyl methacrylate, cyclohexyl methacrylate, methyl acrylate, ethyl acrylate, propyl acrylate, n-butyl acrylate, isobutyl acrylate, tert-butyl acrylate, 2-ethylhexyl acrylate, n-octyl acrylate, cyclohexyl acrylate, or the like, without limitation.

The glycidyl group-containing acrylate monomer plays the role of improving compatibility with a solid phase epoxy resin and adhesiveness with an adhesive (DGU). Particularly, the glycidyl group of the glycidyl group-containing acrylate monomer may react with the amino or imino groups of the silane-based monomer containing at least two amino or imino groups to produce an adhesion site (-OH) with the adhesive (DGU) to improve adhesiveness. The glycidyl group-containing acrylate monomer may particularly be glycidyl methacrylate (GMA), 3,4-epoxycyclohexyl methacrylate, 4-(oxiran-2-ylmethoxy)butyl prop-2-enoate (CAS NO 119692-59-0), without limitation.

The hydroxyl group-containing acrylate monomer may form an adhesion site (-OH) with the adhesive (DGU) and may particularly play the role of improving the weather resistance of the primer. The hydroxyl group-containing acrylate monomer may particularly be 2-hydroxyethyl methacrylate, 2-hydroxypropyl methacrylate, 2-hydroxyethyl acrylate, 2-hydroxypropyl acrylate, 2,3-dihydroxypropyl acrylate, 2,3-dihydroxypropyl methacrylate, 4-hydroxymethyl cyclohexyl-methyl acrylate, 2-hydroxy-3-phenoxypropyl acrylate (HPPA), or the like, without limitation.

The functional acrylate monomer may include the glycidyl group-containing acrylate monomer and the hydroxyl group-containing acrylate monomer in a weight ratio of 1:1 to 5:1, and may particularly include in a weight ratio of 1:1 to 2:1. If the weight ratio of the glycidyl group-containing acrylate monomer and the hydroxyl group-containing acrylate monomer is less than 1:1, adhesiveness with an adhesive (DGU) may become poor, and if the weight ratio is greater than 5:1, weather resistance may become poor.

The weight average molecular weight of the acrylic resin may be 100,000 to 200,000 g/mol. If the weight average molecular weight of the acrylic resin is less than 100,000 g/mol, adhesiveness with a basis material or an adhesive (DGU) may be deteriorated, and if the weight average molecular weight is greater than 200,000 g/mol, storage quality may be deteriorated. The weight average molecular weight may be measured by a conventional method known in the art, for example, may be measured by a method such as GPC (gel permeation chromatography).

The viscosity of the acrylic resin measured at 25°C using a Brookfield viscometer may be 50 to 300 cPs. If the viscosity of the acrylic resin is less than 50 cPs, adhesiveness with a basis material or an adhesive (DGU) may be deteriorated, and if the viscosity is greater than 300 cPs, storage quality may be deteriorated.

For the polymerization of the acrylic resin, the primer composition of the present invention may further include a radical polymerization initiator. The radical polymerization initiator may include at least one selected from common polymerization initiators such as benzoyl peroxide, tert-butyl peroxide, di-tert-butyl peroxide, tert-butyl perbenzoate, tert-butyl perpivalate, tert-amyl perbonzoate, tert-amyl peroxyacetate, di-tert-amyl peroxide, tert-amyl peroxyneodecanoate, tert-butyl peroxyneodecanoate, tert-amyl-(2-ethylhexyl) monoperoxycarbonate, azobisisobutyronitrile, and 2,2-azobis methylbutyronitrile.

The acrylic resin may be included in an amount of 20 to 50 parts by weight, particularly, 30 to 45 parts by weight based on 100 parts by weight of the alkoxysilane polymer. If the amount of the acrylic resin is less than 20 parts by weight based on 100 parts by weight of the alkoxysilane polymer, storage quality may be deteriorated, and if the amount is greater than 50 parts by weight, adhesiveness of the primer with an adhesive (DGU) may be deteriorated.

### <Hydrogenated rosin resin>

The hydrogenated rosin resin included in the primer composition of the present invention plays a role as a tackifier to secure a long pot life, improve adhesiveness at low temperatures, and improve heat storage quality of the primer.

The rosin resin is a resin in a solid form obtained from pine or coniferous trees, and is produced by heating the liquid resin to separate the volatile liquid terpene component. The above rosin resin contains abietic acid as a main component, and may contain resin acids such as neoabietic acid, levopimaric acid, hydroabietic acid, pimaric acid, and dextonic acid.

The hydrogenated rosin resin may include hydrogenated rosin resin among rosin resins. The hydrogenated rosin resin may mean substantially free of non-hydrogenated rosin resins, for example, rosin resins, rosin phenolic resins, gum rosin, wood rosin, and the like. That is, the hydrogenated rosin resin may mean that the non-hydrogenated rosin-based resin (rosin resin, rosin phenolic resin, gum rosin, wood rosin, etc.) is not included at all, or is included in an amount of less than 100 ppm even if it is included.

The hydrogenated rosin resin may include a hydrogenated rosin-modified resin, and the hydrogenated rosin-modified resin may include at least one selected from a hydrogenated rosin ester-based resin and derivatives thereof and specifically may include a methyl ester-based resin of hydrogenated rosin.

The hydrogenated rosin resin may have an acid value of 4 to 8 mgKOH/g, specifically 5 to 7 mgKOH/g. If the acid value of the hydrogenated rosin resin is less than 4 mgKOH/g, the storage quality of the primer composition may be reduced, and if it is greater than 8 mgKOH/g, adhesiveness with the basis material or the adhesive (DGU) may be reduced.

The viscosity measured by a Brookfield viscometer at 25°C of the hydrogenated rosin resin may be 4,000 to 6,600 cPs, specifically 5,000 to 6,000 cPs. If the viscosity of the hydrogenated rosin resin is less than 4,000 cPs, adhesiveness with the adhesive (DGU) may be reduced, and if it exceeds 6,600 cPs, there may be problems in workability.

The hydrogenated rosin resin is included in an amount of 5 to 30 parts by weight, specifically 5 to 25 parts by weight, based on 100 parts by weight of the alkoxy silane polymer. If the content of the hydrogenated rosin resin is less than 5 parts by weight based on 100 parts by weight of the alkoxy silane polymer, adhesiveness with the primer and the adhesive (DGU) may be reduced, and if it is more than 30 parts by weight, storage quality may be reduced.

### <Epoxy resin>

The primer composition of the present invention may further include an epoxy resin.

The epoxy resin additionally included in the primer composition plays the role of improving adhesiveness of the primer with a basis material or DGU along with the hydrogenated rosin resin.

The epoxy resin may include a bisphenol-based epoxy resin, and the bisphenol-based epoxy resin may particularly be a bisphenol A-type epoxy resin, a bisphenol F-type epoxy resin, or a mixture thereof, without limitation. However, the bisphenol A-type epoxy resin is preferably included to secure a long pot life and improve adhesiveness at a low temperature.

The epoxy resin may also include a solid phase epoxy resin, or a liquid phase epoxy resin.

The solid phase epoxy resin may play the role of film formation and providing adhesiveness with an adhesive (DGU).

Particularly, the solid phase epoxy resin has a greater epoxy equivalent (g/eq.) when compared to the liquid phase epoxy resin, and since the great epoxy equivalent means a great molecular weight, the solid phase epoxy resin may be favorable for film formation when compared to the liquid phase epoxy resin, that is, have better adhesiveness with a basis material. Accordingly, in the case where the primer composition of the present invention described above includes the solid phase epoxy resin, the primer composition may secure longer pot life when compared to a case of including the liquid phase epoxy resin, and effects of improving adhesiveness at a low temperature (80°C or less) may be achieved.

In the case where the epoxy resin includes the solid phase epoxy resin, the epoxy equivalent of the solid phase epoxy resin may be 900 to 1,200 g/eq. If the epoxy equivalent of the solid phase epoxy resin is less than 900 g/eq., adhesiveness with an adhesive (DGU) may become poor, and if the epoxy equivalent is greater than 1,200 g/eq., weather resistance may become poor. The epoxy equivalent may be measured according to JIS K7236 and may be measured using perchloric acid, but is not limited thereto.

The viscosity of the solid phase epoxy resin measured at 150°C using an I.C.I viscometer (I.C.I Cone & Plate viscometer) may be 3,000 to 12,000 cPs. If the viscosity of the solid phase epoxy resin is less than 3,000 cPs, adhesiveness with an adhesive (DGU) may become poor, and if the viscosity is greater than 12,000 cPs, defects relating to storage stability may arise.

The softening point of the solid phase epoxy resin (a temperature where a solid phase epoxy resin absorbs heat and melt down) may be 78 to 122°C. If the softening point of the solid phase epoxy resin is less than 78°C, a pot life may be reduced, and defects of storage stability may arise, and if the softening point is greater than 122°C, defects relating to adhesiveness with an adhesive (DGU) may arise. The softening point may be measured using a METTLER FP90, but is not limited thereto.

In addition, the solid phase epoxy resin may include two types of solid phase epoxy resins having different epoxy equivalents. In particular, a first solid phase epoxy resin having a great epoxy equivalent and a second solid phase epoxy resin having a small epoxy equivalent may be included. That is, the epoxy equivalent of the first solid phase epoxy resin may have a greater value than the epoxy equivalent of the second solid phase epoxy resin.

As described above, if the first solid phase epoxy resin having a relatively greater epoxy equivalent and the second solid phase epoxy resin having a relatively smaller epoxy equivalent are mixed and used, the adhesiveness with a basis material or an adhesive (DGU) at a low temperature may be improved.

The first solid phase epoxy resin may be a bisphenol-based epoxy resin synthesized using a fusion process, and the epoxy equivalent of the first solid phase epoxy resin may be 1,100 to 1,200 g/eq., the viscosity thereof measured at 150°C by an I.C.I viscometer (I.C.I Cone & Plate viscometer) may be 5,000 to 12,000 cPs, and the softening point thereof may be 115 to 122°C.

The second solid phase epoxy resin may be a bisphenol-based epoxy resin synthesized using a taffy process, and the epoxy equivalent of the second solid phase epoxy resin may be 900 to 1,000 g/eq., the viscosity thereof measured at 150°C by an I.C.I viscometer (I.C.I Cone & Plate viscometer) may be 3,000 to 7,000 cPs, and the softening point thereof may be 99 to 111°C.

If the epoxy resin includes a liquid phase epoxy resin, the epoxy equivalent of the liquid phase epoxy resin may be 150 to 200 g/eq. If the epoxy equivalent of the liquid phase epoxy resin is less than 150 g/eq., adhesiveness with an adhesive (DGU) may become poor, and if the epoxy equivalent is greater than 200 g/eq., weather resistance may become poor.

The viscosity of the liquid phase epoxy resin measured at 25°C by a Brookfield viscometer may be 10,000 to 15,000 cPs. If the viscosity of the liquid phase epoxy resin is less than 10,000 cPs, adhesiveness with an adhesive (DGU) may become poor, and if the viscosity is greater than 15,000 cPs, defects relating to storage stability may arise.

When the primer composition further includes the epoxy resin, the sum of the total weight of the hydrogenated rosin resin and the epoxy resin may be included in an amount of 10 to 50 parts by weight, particularly, 10 to 30 parts by weight, more particularly, 15 to 30 parts by weight based on 100 parts by weight of the alkoxysilane polymer. If the sum of the total weight of the hydrogenated rosin resin and the epoxy resin is less than 10 parts by weight based on 100 parts by weight of the alkoxysilane polymer, adhesiveness at a low temperature may be deteriorated, and if the sum is greater than 50 parts by weight, adhesiveness with an adhesive (DGU) may become poor.

### <Pigment>

The primer composition of the present invention may additionally include a pigment. The pigment additionally included in the primer composition plays the role of accomplishing the color of the primer in the primer composition, and improving physical properties such as weather resistance and dispersibility.

As the pigment, an extender pigment, or red series, yellow/orange series, blue series, green series, black series, white series, pearl and metallic series pigment, or the like may be used, without limitation.

The pigment may be at least one selected from the group consisting of an extender pigment such as barium sulfate (Ba₂SO₄, barite), barite, calcium carbonate (CaCO₃), clay (Al₂O₃·2SiO₂·2H₂O), bone powder (3MgO·4SiO₂·H₂0), silica powder (SiO₂), diatomaceous earth (SiO₂·nH₂O), silica, bentonite, talc, and aluminum silicate; a white pigment such as titanium oxide (for example, TiO₂), zinc oxide (ZnO), lithopon, zinc sulfide, white lead (2PbCO₃·Pb(OH)₂), and antimony oxide (Sb₂O₃); a black pigment such as carbon black, graphite, and iron black (Fe₃O₄); a yellow pigment such as chrome yellow (PbCrO₃), zinc chromate, cadmium yellow (CdS), lead cyanide (PbCN₂), titanium yellow (TiO₂-NiO-Sb₂O₃), and strontium yellow (SrCrO₄); a red pigment such as iron red (Fe₂O₃), lead tetroxide (Pb₃O₄), mercury sulfide (HgS), cadmium red (a mixture crystal of CdS and HgS), molybdenum red (a mixture crystal of PbCrO₄, PbMoO₄, and PbSO₄), and cuprous oxide (Cu₂O); a blue pigment such as Prussian blue (MFe[Fe(CN)₆], M = K, NH₄, Na), ultramarine (2(Al₂Na₂Si₃O₁₀)Na₂S₄), and cobalt blue (CoO·nAl₂O₃); a green pigment such as chromium green (a mixture of PbCrO₄ and Prussian blue KFe[Fe(CN)₆]), chromium oxide (Cr₂O₃), and chromium hydroxide (Cr₂O₃·2H₂O); a metal powder pigment such as aluminum powder, and bronze powder; and a pearl pigment such as natural pearl essence, and synthetic pearl pigment, but is not limited thereto. In order to improve the color and weather resistance of the primer composition of the present invention, carbon black may preferably be used.

The pigment may be included in an amount of 10 to 30 parts by weight, more particularly, 15 to 20 parts by weight based on 100 parts by weight of the alkoxysilane polymer. If the amount of the pigment is less than 10 parts by weight based on 100 parts by weight of the alkoxysilane polymer, the concealment effects and appearance of the primer may be deteriorated, and if the amount is greater than 30 parts by weight, defects relating to dispersibility and storage quality as a primer may arise.

### <Solvent>

The primer composition of the present invention may additionally include a solvent.

The solvent additionally included in the primer composition may play the role of controlling the viscosity of the primer composition and controlling the dryness of a coated film.

The solvent may include at least one selected from the group consisting of an alcohol-based solvent, a ketone-based solvent, an ester-based solvent, and a carbonate-based solvent.

The alcohol-based solvent may include methanol, ethanol, isopropanol, or the like, the ketone-based solvent may include acetone, methyl ethyl ketone (MEK), methyl propyl ketone, methyl butyl ketone, ethyl propyl ketone, methyl isobutyl ketone, or the like, the ester-based solvent may include methyl acetate, ethyl acetate (EA), n-propyl acetate, n-butyl acetate, ethyl ethoxypropionate, or the like, and the carbonate-based solvent may include dimethyl carbonate (DMC), or the like.

The solvent may include at least one carbonate-based solvent for the compatibility with the acrylic resin or the epoxy resin. The solvent may be included in an amount of 50 to 300 parts by weight, particularly, 70 to 200 parts by weight, more particularly, 80 to 180 parts by weight, further particularly 80 to 160 parts by weight based on 100 parts by weight of the alkoxysilane polymer. If the amount of the solvent is less than 50 parts by weight based on 100 parts by weight of the alkoxysilane polymer, the dispersibility and storage quality of the pigment may be deteriorated, and if the amount is greater than 300 parts by weight, adhesiveness with a basis material or an adhesive (DGU) may be deteriorated.

### <Other additives>

The primer composition of the present invention may further include one or more additives such as a dispersant, a storage stabilizer, and a moisture absorbent to improve the physical properties of a paint and a coated film.

The dispersant plays the role of dispersing the pigment in a uniform and stable state in a composition and may use a dispersant such as EFKA PU 4061, LUBRIZOL 2063, DISPERBYK-180, DISPERBYK-110, and DISPERBYK-2152, without limitation.

The storage stabilizer plays the role of increasing the pot life of the primer and providing storage stability together with workability, and may use a storage stabilizer such as diethyl malonate, without limitation.

The moisture absorbent plays the role of controlling the moisture content of the primer composition and improving workability.

The moisture absorbent may include sodium/potassium aluminosilicate, or the like.

The additive may be included in an amount of 3 to 10 parts by weight based on 100 parts by weight of the alkoxysilane polymer. If the amount of the additive is less than 3 parts by weight based on 100 parts by weight of the alkoxysilane polymer, the dispersibility, workability, storage stability, or the like of the primer composition may be deteriorated, and if the amount is greater than 10 parts by weight, adhesiveness with an adhesive (DGU), weather resistance, or the like may be deteriorated.

Hereinafter, the present invention will be explained more particularly referring to embodiments. However, the embodiments are only for assisting the understanding of the present invention, and the scope of the present invention is not limited to the embodiments in any sense.

### <Preparation Examples>

### <Preparation Example 1> - Synthesis of alkoxysilane polymer

To a reaction vessel, gamma-glycidoxypropylmethoxysilane, N-(beta-aminoethyl)-gamma-aminopropyltrimethoxysilane, and methyl ethyl ketone (MEK), dimethyl carbonate (DMC) and methanol as solvents were added and reacted at a temperature of 40°C to 60°C for 20 to 50 hours to synthesize an alkoxysilane polymer.

In this case, the amounts of the solvents were controlled so as not to exceed 80 wt% of the total weight of the reactants, and the epoxy equivalent (equivalent epoxy weight: EEW) of the alkoxysilane polymer was 3,000 to 5,000 g/eq.

The amounts of all components in Preparation Example 1 are shown in Table 1 below.

### <Preparation Example 2> - Synthesis of acrylic resin

With methyl ethyl ketone (MEK), methyl methacrylate (MMA), butyl methacrylate (BMA), glycidyl methacrylate (GMA), 2-hydroxy-3-phenoxypropyl acrylate (HPPA), and tert-butyl peroxide (TBPO) as an initiator were mixed, and radical polymerization reaction was performed at 75°C to 85°C for 10 to 15 hours to synthesize an acrylic resin.

The amounts of all components in Preparation Example 2 are shown in Table 1 below.

### <Examples>

### <Examples 1 to 9>

The components were mixed in the compositions shown in Table 1 below and premixed using a high-speed stirrer at about 400 to 800 rpm for 40 minutes. After finishing the premixing, dispersing was performed using a ring mill at about 400 to 800 rpm for 70 to 100 minutes. In this case, the internal temperature was maintained so as not to exceed 30°C, and dispersing was performed until a final particle size became 10 µm or less to prepare one-component type primer compositions.

**[Table 1]**

| Division | Component | Example 1 | Example 2 | Example 3 | Example 4 | Example 5 | Example 6 | Example 7 | Example 8 | Example 9 |
|---|---|---|---|---|---|---|---|---|---|---|
| Alkoxysila ne polymer | N-(beta-aminoethyl) gammaaminopropyltrimethoxy silane | 4.90 | 4.90 | 4.90 | 4.90 | 4.90 | 4.90 | 4.90 | 4.90 | 5.90 |
| | Gamma-Glycidoxypropyltrimet hoxysilane | 9.10 | 9.10 | 9.10 | 9.10 | 9.10 | 9.10 | 9.10 | 9.10 | 12.5 |
| | Methyl ethyl ketone(MEK) | 6.71 | 6.71 | 6.71 | 6.71 | 6.71 | 6.71 | 6.71 | 6.71 | 6.71 |
| | Dimethylcarbonate(DMC ) | 15.61 | 15.61 | 15.61 | 15.61 | 15.61 | 15.61 | 15.61 | 15.61 | 15.61 |
| | Methanol | 0.90 | 0.90 | 0.90 | 0.90 | 0.90 | 0.90 | 0.90 | 0.90 | 0.90 |
| Acrylic resin | Methyl methacrylate (MMA) | 2.28 | 2.28 | 2.28 | 2.28 | 2.28 | 2.28 | 2.28 | 2.28 | 2.28 |
| | Butyl methacrylate (BMA) | 1.92 | 1.92 | 1.92 | 1.92 | 1.92 | 1.92 | 1.92 | 1.92 | 1.92 |
| | Glycidylmethacrylate( GMA) | 0.45 | 0.45 | 0.45 | 0.45 | 0.45 | 0.45 | 0.45 | 0.45 | 0.45 |
| | 2-Hydroxy-3-phenoxypropylacrylate (HPPA) (Aronix M5700) | 0.35 | 0.35 | 0.35 | 0.35 | 0.35 | 0.35 | 0.35 | 0.35 | 0.35 |
| | tert-Butyl Peroxide (TBPO) | 0.09 | 0.09 | 0.09 | 0.09 | 0.09 | 0.09 | 0.09 | 0.09 | 0.09 |
| | Methyl ethyl ketone(MEK) | 8.49 | 8.49 | 8.49 | 8.49 | 8.49 | 8.49 | 8.49 | 8.49 | 8.49 |
| Tackifier (hydrogena ted rosin resin) | The methyl ester of Hydrogenated rosin (Foralyn 5020-F) (Viscosity: 5,400 cPs, Density: | 7.80 | 3.90 | 1.96 | 1.96 | 3.90 | 1.96 | 15.6 | 3.91 | 1.96 |
| | 1.03kg/dm³) | | | | | | | | | |
| Epoxy resin | Bisphenol A epoxy resin 1 (Solid phase, Epoxy equivalent 1,100-1,200 g/eq.) | - | - | - | - | 2.76 | 4.13 | - | - | - |
| | Bisphenol A epoxy resin 2 (Solid phase, Epoxy equivalent 900-1,000 g/eq.) | - | - | - | - | 1.14 | 1.71 | - | - | - |
| | Bisphenol A epoxy resin 3 (Liquid phase, Epoxy equivalent 184-190 g/eq.) | - | 3.90 | 5.84 | 5.84 | - | - | - | - | - |
| Solvent | Ethyl Acetate (EA) | 18.00 | 18.00 | 18.00 | 18.00 | 18.00 | 18.00 | 13.00 | 19.50 | 19.44 |
| | Dimethylcarbonate (DMC) | 15.20 | 15.20 | 15.20 | 15.20 | 15.20 | 15.20 | 12.40 | 17.59 | 15.20 |
| Pigment | carbon black (Raven425) | 6.00 | 6.00 | 6.00 | 6.00 | 6.00 | 6.00 | 6.00 | 6.00 | 6.00 |
| Moisture absorbent | Baylith L-Powder(zeolite) | 0.45 | 0.45 | 0.45 | 0.45 | 0.45 | 0.45 | 0.45 | 0.45 | 0.45 |
| Dispersant | Hyperbranched Polyester(BYK-2152) | 1.25 | 1.25 | 1.25 | 1.25 | 1.25 | 1.25 | 1.25 | 1.25 | 1.25 |
| Storage stabilizer | Diethyl malonate(DEM) | 0.50 | 0.50 | 0.50 | 0.50 | 0.50 | 0.50 | 0.50 | 0.50 | 0.50 |

### <Comparative Examples 1 to 3>

The components were mixed in the compositions shown in Table 2 below to prepare primer compositions.

**[Table 2]**

| Division | Component | Comparative Example 1 | Comparative Example 2 | Comparative Example 3 |
|---|---|---|---|---|
| Alkoxysilane polymer | N-(beta-aminoethyl) gammaaminopropyltrimethoxysilane | 4.90 | 4.90 | 4.90 |
| | GammaGlycidoxypropyltrimethoxysilane | 9.10 | 9.10 | 9.10 |
| | Methyl ethyl ketone(MEK) | 6.71 | 6.71 | 6.71 |
| | Dimethylcarbonate(DMC) | 15.61 | 15.61 | 15.61 |
| | Methanol | 0.90 | 0.90 | 0.90 |
| Acrylic resin | Methyl methacrylate(MMA) | 2.28 | 2.28 | 2.28 |
| | Butyl methacrylate(BMA) | 1.92 | 1.92 | 1.92 |
| | Glycidylmethacrylate(GMA) | 0.45 | 0.45 | 0.45 |
| | 2-Hydroxy-3-phenoxypropylacrylate (HPPA) (Aronix M5700) | 0.35 | 0.35 | 0.35 |
| | tert-Butyl Peroxide(TBPO) | 0.09 | 0.09 | 0.09 |
| | Methyl ethyl ketone(MEK) | 8.49 | 8.49 | 8.49 |
| Tackifier | Gum Rosin | 7.80 | - | - |
| | Crystalizer | - | 7.80 | - |
| | Rosin resin | - | - | 7.80 |
| Solvent | Ethyl Acetate (EA) | 18.00 | 18.00 | 18.00 |
| | Dimethylcarbonate(DMC) | 15.20 | 15.20 | 15.20 |
| Pigment | carbon black(Raven425) | 6.00 | 6.00 | 6.00 |
| Moisture absorbent | Baylith L-Powder(zeolite) | 0.45 | 0.45 | 0.45 |
| Dispersant | Hyperbranched Polyester(BYK-2152) | 1.25 | 1.25 | 1.25 |
| Storage stabilizer | Diethyl malonate(DEM) | 0.50 | 0.50 | 0.50 |

### <Experimental Examples>

The physical properties of the primer compositions and primers obtained in Examples 1 to 9 and Comparative Examples 1 to 3 were measured by the methods below and are shown in Table 3 and Table 4 below.

### 1) Evaluation of weather resistance

The evaluation method of weather resistance is as follows. A specimen was exposed in XENON WEATHER-O-METER (WOM) for 1,000 hours, and an appearance state after the exposure was verified with the naked eye.

### (XENON test conditions follow MS600-35)

O (excellent): appearance after WOM exposure was black
Δ (good): appearance after WOM exposure was near black
X (bad): appearance after WOM exposure was near white
2) Evaluation of sedimentation

The sedimentation of carbon black was observed with the naked eye and evaluated. Evaluation standard was as follows.
O (excellent): a coated film of a supernatant after standing at 20°C for one week was black
Δ (good): a coated film of a supernatant after standing at 20°C for one week was near black
X (bad): a coated film of a supernatant after standing at 20°C for one week was not black

### 3) Evaluation of adhesiveness

On a glass or an adherend hard-coated with silicone on the surface of a glass, a wash coat (primer) composition was applied into an application area of 25 to 150 mm, and a urethane sealant and an adhesive [KCC, product name: PU9370-BTX] were compressed thereon to obtain a specimen.

The specimen was stored at 20°C at a humidity of 65%RH. After 7 days from the application, a peeling test was conducted, and the state of an adhesive interface was observed. Evaluation standard was as follows.
O (excellent): aggregation destruction of a sealant layer was greater than 90%
Δ (good): aggregation destruction of a sealant layer was from 30% to 90%
X (bad): interface of sealant-primer was destructed, and aggregation destruction of a sealant layer was less than 30%

### 4) Evaluation of working adhesiveness

On a glass or an adherend hard-coated with silicone on the surface of a glass, a wash coat (primer) composition was applied into an application area of 25 to 150 mm, and the specimen thus obtained was stood under conditions of 20°C and a humidity of 65%RH for 3 months. Then, a urethane sealant and an adhesive [KCC, product name: PU9370-BTX] were compressed thereon to obtain a specimen.

The specimen was stored at 20°C at a humidity of 65%RH. After 7 days from the application, a peeling test was conducted, and the state of an adhesive interface was observed. Evaluation standard was as follows.
O (excellent): aggregation destruction of a sealant layer was greater than 90%
Δ (good): aggregation destruction of a sealant layer was from 30% to 90%
X (bad): interface of sealant-primer was destructed, and aggregation failure of a sealant layer was less than 30%

### 5) Evaluation of storage stability

After compounding, the primer composition was stored at 60°C for 10 days, and evaluation was conducted. Evaluation standard was as follows.
O (excellent): precipitate on a floor was 5% or less, and gelation did not occur
Δ (good): precipitate on a floor was greater than 5% and less than 10%, and gelation did not occur
X (bad): gelation occurred, or precipitate on a floor was 10% or more

**[Table 3]**

| Division | Example 1 | Example 2 | Example 3 | Example 4 | Example 5 | Example 6 | Example 7 | Example 8 | Example 9 |
|---|---|---|---|---|---|---|---|---|---|
| Weather resistance | ○ | ○ | ○ | ○ | ○ | ○ | ○ | ○ | ○ |
| Sedimentation | ○ | ○ | ○ | ○ | ○ | ○ | Δ | ○ | ○ |
| Working adhesiveness (glass, 3 months) | Δ | Δ | Δ | Δ | ○ | ○ | Δ | Δ | Δ |
| Adhesiveness (glass) | ○ | ○ | ○ | ○ | ○ | ○ | ○ | Δ | Δ |
| Storage stability | ○ | ○ | ○ | ○ | ○ | ○ | Δ | ○ | ○ |

**[Table 4]**

| Division | Comparative Example 1 | Comparative Example 2 | Comparative Example 3 |
|---|---|---|---|
| Weather resistance | ○ | ○ | ○ |
| Sedimentation | ○ | × | × |
| Working adhesiveness (glass, 3 months) | × | × | × |
| Adhesiveness (glass) | × | × | ○ |
| Storage stability | ○ | ○ | ○ |

## Claims

1. A primer composition comprising:
an alkoxysilane polymer comprising a unit derived from a silane-based monomer containing at least two amino or imino groups and a unit derived from a trialkoxysilane-based monomer;
an acrylic resin comprising at least one selected from units derived from non-functional acrylate monomers; and
a hydrogenated rosin resin,
wherein the hydrogenated rosin resin comprises at least one selected from hydrogenated rosin ester-based resins and derivatives thereof, and
wherein the hydrogenated rosin resin is contained in an amount of 5 to 30 parts by weight, based on 100 parts by weight of the alkoxysilane polymer.

2. The primer composition according to claim 1, wherein the alkoxysilane polymer comprises an alkoxysilane polymer obtained by reacting the trialkoxysilane-based monomer and the silane-based monomer containing at least two amino or imino groups in a weight ratio of greater than 1:1 and 5:1 or less.

3. The primer composition according to claim 1, wherein the acrylic resin further comprises a unit derived from a functional acrylate monomer, and
the functional acrylate monomer comprises at least one selected from a glycidyl group-containing acrylate monomer and a hydroxyl group-containing acrylate monomer.

4. The primer composition according to claim 3, wherein the acrylic resin comprises an acrylic resin obtained by reacting the non-functional acrylate monomer and the functional acrylate monomer in a weight ratio of 5:1 to 25:1.

5. The primer composition according to claim 1, wherein the acrylic resin is contained in an amount of 20 to 50 parts by weight, based on 100 parts by weight of the alkoxysilane polymer.

6. The primer composition according to claim 1, further comprising an epoxy resin.

7. The primer composition according to claim 6, wherein the sum of the total weight of the hydrogenated rosin resin and the epoxy resin is 10 to 50 parts by weight based on 100 parts by weight of the alkoxy silane polymer.

## Patentansprüche

1. Haftvermittlerzusammensetzung, die Folgendes umfasst:
ein Alkoxysilanpolymer, das eine Einheit, welche sich von einem Monomer auf Silanbasis ableitet, das mindestens zwei Amino- oder Iminogruppen enthält, und eine Einheit umfasst, welche sich von einem Monomer auf Trialkoxysilanbasis ableitet;
ein Acrylharz, das von Einheiten, welche sich von Acrylatmonomeren ohne funktionelle Gruppen ableiten, mindestens eine daraus ausgewählte umfasst; und
ein hydriertes Kolophoniumharz,
wobei das hydrierte Kolophoniumharz von Harzen auf Basis hydrierter Kolophoniumester und deren Derivate mindestens ein daraus ausgewähltes umfasst, und
wobei das hydrierte Kolophoniumharz in einer Menge von 5 bis 30 Gewichtsteilen, bezogen auf 100 Gewichtsteile des Alkoxysilanpolymers, enthalten ist.

2. Haftvermittlerzusammensetzung nach Anspruch 1, wobei das Alkoxysilanpolymer ein Alkoxysilanpolymer umfasst, das erhalten wurde, indem das Monomer auf Trialkoxysilanbasis und das Monomer auf Silanbasis, welches mindestens zwei Amino- oder Iminogruppen enthält, in einem Gewichtsverhältnis größer als 1:1 und von höchstens 5:1 umgesetzt wurden.

3. Haftvermittlerzusammensetzung nach Anspruch 1, wobei das Acrylharz weiterhin eine Einheit umfasst, die sich von einem Acrylat-Monomer mit funktionellen Gruppen ableitet, und
das Acrylatmonomer mit funktionellen Gruppen von einem Acrylatmonomer, das Glycidylgruppen enthält, und/oder einem Acrylatmonomer, das Hydroxylgruppen enthält, mindestens ein daraus ausgewähltes umfasst.

4. Haftvermittlerzusammensetzung nach Anspruch 3, wobei das Acrylharz ein Acrylharz umfasst, das erhalten wurde, indem das Acrylatmonomer ohne funktionelle Gruppen und das Acrylatmonomer mit funktionellen Gruppen in einem Gewichtsverhältnis von 5:1 bis 25:1 umgesetzt wurden.

5. Haftvermittlerzusammensetzung nach Anspruch 1, wobei das Acrylharz in einer Menge von 20 bis 50 Gewichtsteilen, bezogen auf 100 Gewichtsteile des Alkoxysilanpolymers, enthalten ist.

6. Haftvermittlerzusammensetzung nach Anspruch 1, wobei sie weiterhin ein Epoxidharz umfasst.

7. Haftvermittlerzusammensetzung nach Anspruch 6, wobei die Summe des Gesamtgewichts des hydrierten Kolophoniumharzes und des Epoxidharzes 10 bis 50 Gewichtsteile beträgt, bezogen auf 100 Gewichtsteile des Alkoxysilanpolymers.

## Revendications

1. Composition d'apprêt, comprenant :
un polymère d'alcoxysilane comprenant une unité dérivée d'un monomère à base de silane contenant au moins deux groupes amino ou imino et une unité dérivée d'un monomère à base de trialcoxysilane ;
une résine acrylique comprenant au moins un élément choisi parmi les unités dérivées de monomères d'acrylate non fonctionnels ; et
une résine de colophane hydrogéné,
dans laquelle la résine de colophane hydrogéné comprend au moins une résine choisie parmi des résines à base d'ester de colophane hydrogénés et des dérivés de celles-ci, et
dans laquelle la résine de colophane hydrogéné est contenue en une quantité de 5 à 30 parties en poids, sur la base de 100 parties en poids du polymère d'alcoxysilane.

2. Composition d'apprêt selon la revendication 1, dans laquelle le polymère d'alcoxysilane comprend un polymère d'alcoxysilane obtenu en faisant réagir le monomère à base de trialcoxysilane et le monomère à base de silane contenant au moins deux groupes amino ou imino selon un rapport pondéral supérieur à 1:1 et 5:1, ou moins.

3. Composition d'apprêt selon la revendication 1, dans laquelle la résine acrylique comprend en outre une unité dérivée d'un monomère d'acrylate fonctionnel, et
le monomère d'acrylate fonctionnel comprend au moins un choisi parmi un monomère d'acrylate contenant un groupe glycidyle et un monomère d'acrylate contenant un groupe hydroxyle.

4. Composition d'apprêt selon la revendication 3, dans laquelle la résine acrylique comprend une résine acrylique obtenue en faisant réagir le monomère d'acrylate non fonctionnel et le monomère d'acrylate fonctionnel selon un rapport pondéral de 5:1 à 25:1.

5. Composition d'apprêt selon la revendication 1, dans laquelle la résine acrylique est contenue en une quantité de 20 à 50 parties en poids, sur la base de 100 parties en poids du polymère d'alcoxysilane.

6. Composition d'apprêt selon la revendication 1, comprenant en outre une résine époxy.

7. Composition d'apprêt selon la revendication 6, dans laquelle la somme du poids total de la résine de colophane hydrogéné et de la résine époxy est de 10 à 50 parties en poids, sur la base de 100 parties en poids du polymère d'alcoxysilane.
